# EUROPÄISCHE PATENTSCHRIFT

(11) **EP 1 218 909 B1**
(45) Veröffentlichungstag und Bekanntmachung des Hinweises auf die Patenterteilung: **07.05.2003**
(21) Anmeldenummer: 00972613.4
(22) Anmeldetag: 28.09.2000
(51) Int. Cl.: H01H 51/01, H01H 51/22, H01H 50/32

(54) **LASTTRENNSCHALTER, VORZUGSWEISE ZUM EINSATZ IN KRAFTFAHRZEUGEN**
LOAD-DISCONNECTING SWITCH, ESPECIALLY FOR USE IN MOTOR VEHICLES
SECTIONNEUR DE CHARGE S'UTILISANT NOTAMMENT DANS DES AUTOMOBILES

(30) Priorität: 29.09.1999 DE 19946735
(43) Veröffentlichungstag der Anmeldung: 03.07.2002
(73) Patentinhaber: TYCO Electronics Logistics AG, 9323 Steinach (CH)
(72) Erfinder: HANKE, Martin, 13125 Berlin (DE); SAFFIAN, Bernd, 10407 Berlin (DE); HÄHNEL, Thomas, 14199 Berlin (DE); VOGEL, Rainer, 14513 Teltow (DE); PIETSCH, Karsten, 10407 Berlin (DE)
(74) Vertreter: Hirsch, Peter, Dipl.-Ing.
(86) Internationale Anmeldenummer: DE0003463
(87) Internationale Veröffentlichungsnummer: WO01024214

(56) Entgegenhaltungen:
- EP-A- 0 727 801
- DE-B- 1 151 569
- DE-C- 4 110 240
- DE-C- 19 701 933
- FR-A- 1 420 559
- FR-A- 1 502 300
- GB-A- 2 202 378
- US-A- 3 925 742

## Beschreibung

Die Erfindung betrifft einen Lasttrennschalter, insbesondere für den Laststromkreis einer Fahrzeugbatterie, wobei der Laststromkreis über ein Elektromagnetsystem automatisch auftrennbar ist.

Bei Kraftfahrzeugen ist es in bestimmten Störungssituationen wünschenswert, das Bordnetz schlagartig spannungsfrei zu schalten. Solche Fälle sind beispielsweise ein Kurzschluß im Lastkreis, der zur Batterieentladung oder zu einem Fahrzeugbrand führen kann, eine Verpolung bei Starthilfe, die zu einer Schädigung der Batterie, aber auch zu einer Zerstörung der elektronischen Systeme im Bordnetz führen kann, oder auch ein Aufprall-Unfall, bei dem ebenfalls Kurzschlüsse mit einer daraus resultierenden Brandgefahr entstehen können.

Aus der DE 41 10 240 C1 ist bereits eine Einrichtung zur Absicherung eines Hauptstrompfades in einem Kraftfahrzeug bekannt. Hierbei wird eine Abschaltsituation durch verschiedene Fühler und Vergleichsmittel festgestellt und zur Trennung des Stromkreises ausgewertet. Als Abschaltmittel werden dort beispielsweise eine Sprengkapsel oder ein elektromagnetischer Aktuator genannt, ohne daß auf die Konstruktion und die Funktion eines derartigen Aktuators näher eingegangen wird.

Aus der DE 197 01 933 C1 ist ein Lasttrennschalter für den Laststromkreis einer Fahrzeugbatterie bekannt, bei dem eine Kontaktanordnung zwischen eine Polklemme und einen Laststromkreis geschaltet ist. Beim Auftreten eines Störungszustandes wird über ein Elektromagnetsystem die Kontaktanordnung entriegelt und der Stromkreis unterbrochen. Dieser bekannte Lasttrennschalter besitzt eine Anordnung mit einer Kontaktwippe mit verhältnismäßig vielen Einzelteilen, die einen entsprechenden Aufwand in der Herstellung und im Volumen benötigt.

Ziel der vorliegenden Erfindung ist es, einen Lasttrennschalter zu schaffen, der einfach im Aufbau ist, auch bei hohen Beschleunigungen nicht ungewollt schaltet und ein geringes Volumen aufweist.

Erfindungsgemäß wird dieses Ziel mit einem Lasttrennschalter mit folgenden Merkmalen erreicht:
- einem Gehäuse mit einem Sockel und einer Gehäusekappe,
- einem Magnetsystem mit einer Spule, einer Kernanordnung und einem Anker, wobei die Kernanordnung einen dauermagnetischen Abschnitt besitzt, der eine Haltekraft aufbringt, durch die der Anker an Polflächen der Kernanordnung angezogen ist, und wobei das Magnetsystem entgegen dem dauermagnetischen Abschnitt erregbar ist,
- einer Ankerfeder, die den Anker in eine geöffnete Position vorspannt, wobei die Haltekraft des dauermagnetischen Abschnitts bei angezogenem Anker größer ist als die Federkraft der Ankerfeder,
- einem Kontaktsystem mit einer Kontaktfeder, einem Schaltkontakt, der auf der Kontaktfeder angeordnet ist, und einem Festkontakt, der mit dem Schaltkontakt zusammenwirkt,
- einem ersten und einem zweiten aus dem Gehäuse herausführenden Anschlußleiter zum Anschluß des Schaltkontaktes und des Festkontaktes.

Ein wesentliches Element des Lasttrennschalters ist der dauermagnetische Abschnitt der Kernanordnung. Er bewirkt, daß der Magnetkreis im Ruhezustand einen angezogenen Anker besitzt und demnach im Ruhezustand keine beweglichen Teile aufweist, auf die nicht eine haltende Kraft ausgeübt wird. Dies hat den Vorteil, daß der Aufbau besonders beschleunigungsfest ist. Bei Einsatz als Batterietrennschalter in einem Kraftfahrzeug ist gewährleistet, daß auch bei hohen Beschleunigungen, beispielsweise bei einem Unfall, der Lasttrennschalter nicht vor dem Airbag ausgelöst wird. Außerdem ist bei versehentlichem Herunterfallen bei der Montage die Gefahr einer Beschädigung der beweglichen Teile vermindert. Eine elektrische Erregung der Spule ruft ein Abfallen des Ankers hervor, da durch die erregte Spule ein Magnetfluß erzeugt wird, der dem durch den Dauermagneten erzeugten Magnetfluß entgegengesetzt ist. Infolgedessen reicht die darauf abgestimmte Federkraft einer Ankerfeder aus, den Anker zu öffnen. Die Verwendung eines Dauermagneten als Halteelement ermöglicht es, die nötige Ansteuerleistung sehr gering zu halten. So ist ein besonders geringes Bauvolumen realisierbar.

In einer vorteilhaften Ausführung ist eine zusätzliche mechanische Verklinkung vorgesehen. Dadurch kann die notwendige Auslösekraft weiter verringert werden. Außerdem wird durch die Verklinkung die Beschleunigungsfestigkeit größer..

In einer vorteilhaften Ausführung weist die Ankerfeder als Fortsetzung einen Federbügel auf, der eine manuelle Einschalt- und Auslösetaste realisiert. Dabei ist es günstig, wenn sich der Federbügel entlang einer Außenseite der Gehäusekappe erstreckt. Besonders vorteilhaft ist es, wenn die Gehäusekappe in bestimmten Bereichen elastisch ausgeführt ist, so daß eine Kraft von der Außenseite des Gehäuses auf den Federbügel ausgeübt werden kann.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. Es zeigen:
- Figur 1: einen erfindungsgemäßen Lasttrennschalter mit teilweise aufgeschnittener Gehäusekappe in einer dreidimensionalen Darstellung,
- Figur 2: den Lasttrennschalter aus Figur 1 in einem Längsschnitt und die
- Figuren 3A, 3B: den Lasttrennschalter aus Figur 1 in zwei Funktionsphasen in einem Längsschnitt.

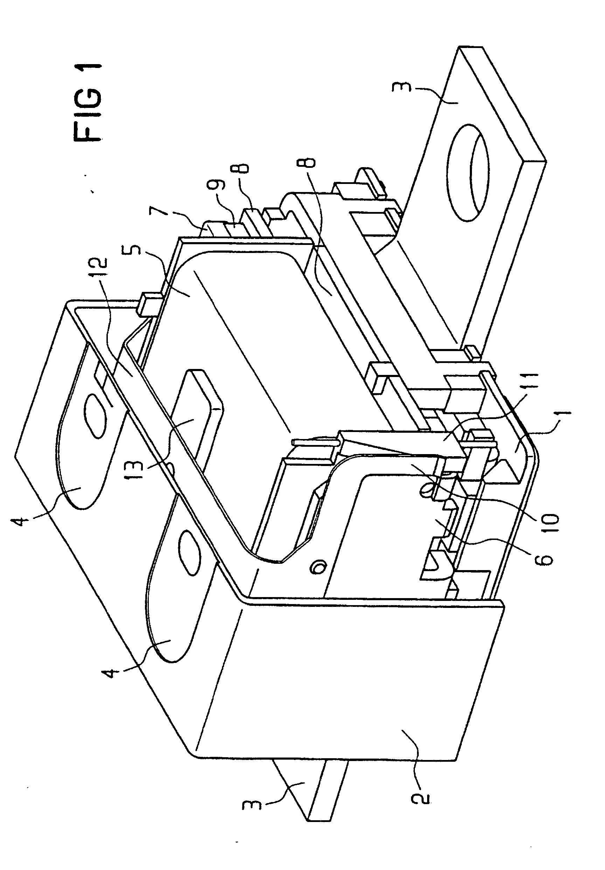

In der Figur 1 wird ein Überblick über einen erfindungsgemäßen Lasttrennschalter gegeben, wobei in der dreidimensionalen Darstellung durch die teilweise aufgeschnittene Gehäusekappe ein Teil des Magnetsystems erkennbar ist. Die Elemente des Lasttrennschalters sind auf einem Sockel 1 aufgebaut. Eine Gehäusekappe 2 ist über die Anordnung geschoben und bildet zusammen mit dem Sockel 1 ein geschlossenes Gehäuse. Aus dem Gehäuse 1 und 2 führen zwei Anschlußleiter 3 heraus, an denen der Lastkreis eines Fahrzeuges angeschlossen werden kann. Die Gehäusekappe 2 weist zwei elastische Druckbereiche 4 auf, über die der Lasttrennschalter manuell ein- und ausgeschaltet werden kann. Von dem Magnetkreis des Lasttrennschalters ist eine Spule 5, ein Anker 6, ein Kern 7, ein Joch 8 und ein Dauermagnet 9 erkennbar. An der von dem Anker 6 abgewandten Seite der Spule 5 weist das Joch 8 eine Z-förmige Kröpfung auf, so daß der abgekröpfte Abschnitt parallel zu dem aus der Spule herausragenden Abschnitt des Kernes 7 liegt. Zwischen den beiden parallelen Abschnitten des Joches 8 und des Kernes 7 verbleibt ein Spalt, in den der Dauermagnet 9 aufgenommen ist. Die einfache Montagemöglichkeit des Dauermagneten 9 ist eine Vorteil dieser Konstruktion, denn dauermagnetische Werkstoffe sind spröde und daher empfindlich. Die Kernanordnung, bestehend aus dem Kern 7, dem Dauermagneten 9 und dem Joch 8, bildet mit dem Anker 6 einen geschlossenen Magnetkreis mit einem durch den Dauermagneten 9 verursachten permanenten Magnetfluß. Die Ansteuerung der Spule 5 ist so vorgesehen, daß der durch die Spule erzeuge Magnetfluß dem durch den Dauermagneten 9 erzeugten Magnetfluß entgegenwirkt.

Der Anker 6 wird durch eine Ankerfeder 10 in die geöffnete Position vorgespannt. Sie ist im oberen Bereich des Ankers 6 mit diesem vernietet und stützt sich nahe ihres freien Federendes an einem Abstützabschnitt 11 ab, der in diesem Ausführungsbeispiel als Teil eines Spulenkörperflansches ausführt ist. Eine andere Möglichkeit zur Bereitstellung eines Abstützabschnittes wäre, das Joch 8 so weit zu verlängern, daß die Ankerfeder 10 sich gegen das Joch 8 abstützen kann. Eventuell müßte in diesem Fall der Anker 6 mit Ausnehmungen versehen sein, so daß das Joch 8 oder Jochabschnitte den Anker durchragen können.

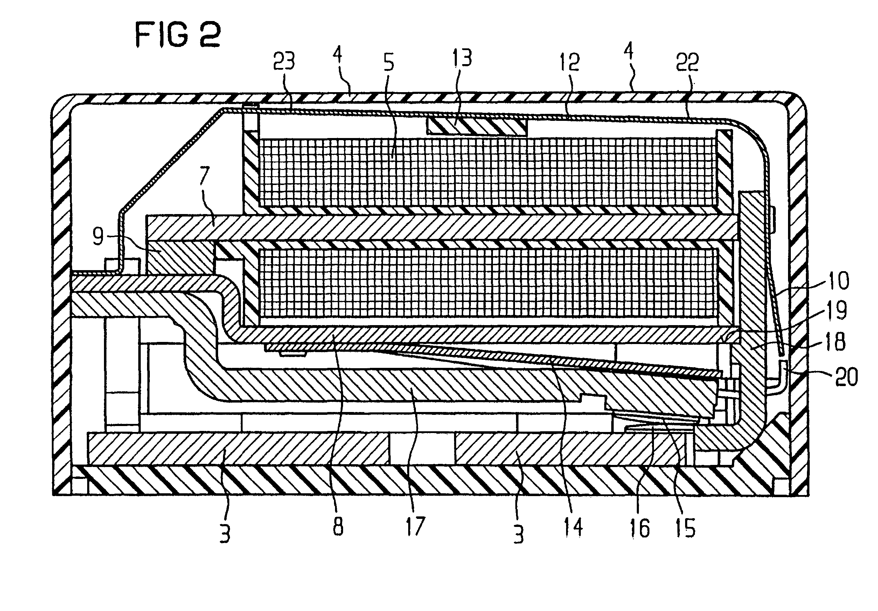

In einer Verlängerung erstreckt sich die Ankerfeder 10 bogenförmig um die Spule 5 herum und ist an der von dem Anker 6 abgewandten Seite der Spule befestigt. Der so gebildete Federbügel 12 verläuft parallel und in dichtem Abstand von der Oberseite der Gehäusekappe 2. Über die Druckbereiche 4 kann eine Kraft auf den Federbügel 12 ausgeübt werden. Auf diese Weise ist eine manuelle Einschalt- und Auslösetaste realisiert, deren Funktion später anhand von Figur 2 beschrieben ist. In der Mitte des Federbügels 12 ist an dem Federbügel 12 eine Druckplatte 13 so befestigt, daß sie zwischen dem Federbügel 12 und der Wicklung der Spule 5 liegt. Auf diese Weise besitzt der Federbügel 12 eine feste Lagerung an dieser Stelle, so daß eine Wippe gebildet ist. Die Druckbereiche 4 zum Ein- und Ausschalten sind dadurch klar getrennt. Alternativ kann beispielsweise ein zusätzlicher Flansch oder Steg an dem Spulenkörper vorgesehen werden, der die Funktion der Lagerung des Federbügels 12 übernimmt. In diesem Fall hat die altersbedingte Schrumpfung des Wicklungspaketes keinen Einfluß auf den Lagerpunkt des Federbügels 12.

In der Figur 2 ist zusätzlich ein Kontaktsystem zu erkennen. Dieses besteht aus einer Kontaktfeder 14, die an dem Joch 8 befestigt ist, und die an dem anderen Ende einen Schaltkontakt 15 trägt. Dieser wirkt mit einem an einem der Anschlußleiter 3 befestigten Festkontakt 16 zusammen. Da der Lasttrennschalter dafür vorgesehen ist, sehr hohe Ströme zu führen, reicht die Kontaktfeder zum Tragen dieses Stromes nicht aus. Daher besitzt der Lasttrennschalter eine zusätzliche Litze 17, die eine niederohmige Verbindung zu dem Schaltkontakt 15 herstellt. Ein weiterer Grund für die Benützung einer zusätzlichen Litze 17 ist, daß die Kontaktfeder 14 aus einem Material gefertigt ist, das der mechanischen Beanspruchung genügt. Vorteilhafte mechanische Eigenschaften bedingen jedoch, daß das Material einen relativ hohen spezifischen Widerstand besitzt. Im Bereich der Befestigung der Litze 17 an dem Joch 8 ist die Verbindung zu dem anderen der Anschlußleiter 3 vorgesehen. An der der Spule 5 zugewandten Seite des Ankers 6 ist an diesem eine Rastnase 18 so vorgesehen, daß sie an einer Kante 19 des Joches 8 anliegt, wenn die Kontakte 15 und 16 geschlossen sind. Die Rastnase 18 ist beispielsweise als Prägewarze ausgeführt. Der Anker 6 selber ist L-förmig gestaltet, wobei der Längsschenkel des L an Polflächen des Kernes 7 und des Joches 8 anliegt. Der Querschenkel greift unter das freie Ende der Kontaktfeder 14 bzw. des Schaltkontaktes 15.

Solange die Spule 5 nicht erregt ist, wird der Anker 6 durch die Haltekraft des Dauermagneten 9 in dieser Position gehalten. Bei Erregung der Spule 5 wird in dem Magnetkreis ein magnetischer Fluß erzeugt, der dem durch den Dauermagneten 9 erzeugten Magnetfluß entgegenwirkt und diesen somit schwächt. Wird die Spule 5 stark genug erregt, so ist die Öffnungskraft, die die Ankerfeder 10 auf den Anker 6 ausübt, größer als die Haltekraft durch den Dauermagneten 9. Dadurch entsteht ein kleiner Luftspalt zwischen dem Kern 7 und dem Anker 6. Dieser Luftspalt bewirkt eine starke Erhöhung des magnetischen Widerstandes des Magnetkreises. Dadurch sinkt die Haltekraft sprunghaft und die Ankerfeder 10 kann den Anker 6 vollständig von dem Kern 7 und dem Joch 8 lösen. Der Spalt zwischen dem Anker 6 und dem Joch 8 wird so groß, daß sich die Verrastung von der Rastnase 18 und dem Joch 8 löst. Eine Aufreißfeder 20, die in einer Ausnehmung des Ankers 6 angreift, drückt den Anker 6 nach oben, wobei dieser nicht mehr durch die Verrastung durch die Rastnase 18 und das Joch 8 gehalten wird. Die Kontaktfeder 14 und die Aufreißfeder 20 bestehen aus einem Stück. In der Aufwärtbewegung reißt der Querschenkel des Ankers 6 den Schaltkontakt 15 mit, so daß die Verbindung zwischen dem Festkontakt 16 und dem Schaltkontakt 15 getrennt wird.

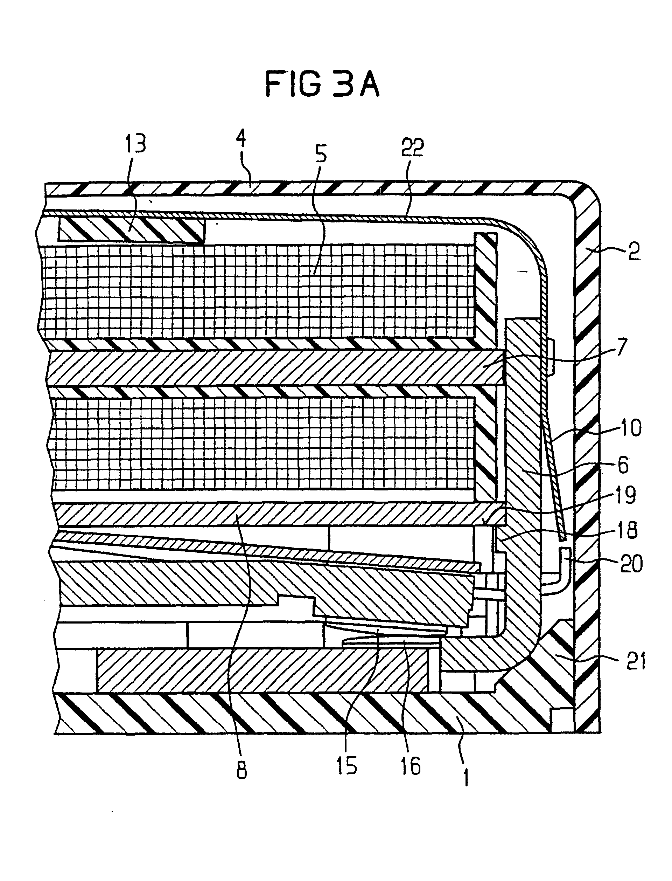

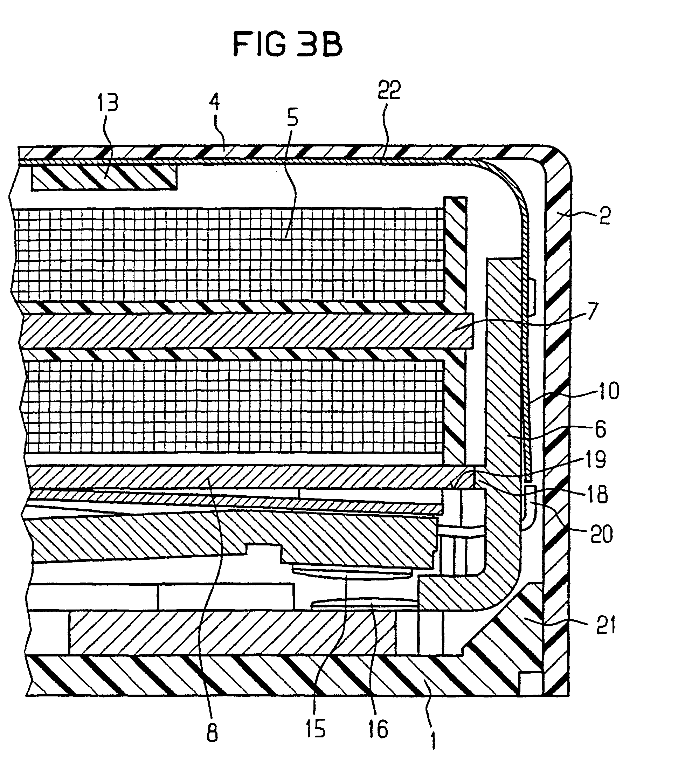

Die Figur 3A zeigt einen vergrößerten Ausschnitt des Lasttrennschalters, wobei die Kontakte 15 und 16 geschlossen sind. In Figur 3B ist das Kontaktsystem mit geöffneten Kontakten 15 und 16 dargestellt, wobei die Rastnase 18 nun an der Polfläche des Jochs 8 anliegt.

Anhand der Figuren 3A und 3B ist auch die Funktion des Federbügels 12 nachvollziehbar. Wird bei geöffneten Kontakten 15 und 16 auf die ankerseitige Hälfte 22 des Federbügels 12 eine Kraft ausgeübt, im vorliegenden Ausführungsbeispiel durch das Drücken auf den entsprechenden Druckbereich 4 der Gehäusekappe 2, so wird der Anker 6 nach unten gedrückt. Dabei wird über die Aufreißfeder 20 die Kontaktfeder 14 gespannt und der Schaltkontakt 15 und der Festkontakt 16 berühren sich wieder, so daß der Strompfad zwischen den Anschlußleitern 3 geschlossen ist. Der Anker 6 wird dabei über die Schräge 21 des Sokkels 1 so abgelenkt, daß sich die Rastnase 18 unter die Kante 19 des Jochs 8 in die verrastete Position schiebt. Wird auf die dem Anker abgewandte Hälfte 23 des Federbügels 12 bei geschlossenen Kontakten 15 und 16 ein Druck ausgeübt, so verschiebt sich der Federbügel 12 in Richtung des Ankers 6, so daß der Anker 6 von dem Kern 7 gelöst wird, die Verrastung sich löst und die Kontakte aufreißen. Die elastische Ausführung der Druckbereiche 4 zur Betätigung des Federbügels 12 birgt den Vorteil, daß so keine Öffnungen oder undichte Stellen in der Gehäusekappe 2 entstehen. Um ein abgedichtetes Gehäuse zu erreichen, muß somit nur die Gehäusekappe 2 gegenüber dem Sockel 1 abgedichtet werden. Dies kann durch einfaches Vergießen geschehen.

Die Ansprecherregung des Lasttrennschalters wird durch die Haltekraft des Magneten 9 und die Spannung der Ankerfeder 10 bestimmt. Zur Festlegung einer definierten Ansprecherregung ist ein mechanisches Justieren nicht notwendig, da die Justierung durch ein Aufmagnetisieren des Dauermagneten 9 erreicht werden kann.

## Patentansprüche

1. Lasttrennschalter, vorzugsweise zum Einsatz in Kraftfahrzeugen, mit
- einem Gehäuse mit einem Sockel (1) und einer Gehäusekappe (2),
- einem Magnetsystem mit einer Spule (5), einer Kernanordnung (7, 8, 9) und einem Anker (6), wobei die Kernanordnung (7, 8, 9) einen dauermagnetischen Abschnitt (9) besitzt, der eine Haltekraft aufbringt, durch die der Anker (6) an Polflächen der Kernanordnung (7, 8, 9) angezogen ist, und wobei das Magnetsystem entgegen dem dauermagnetischen Abschnitt (9) erregbar ist,
- einer Ankerfeder (10), die den Anker (6) in eine geöffnete Position vorspannt, wobei die Haltekraft des dauermagnetischen Abschnitts (9) bei angezogenem Anker (6) größer ist als die Federkraft der Ankerfeder (10),
- einem Kontaktsystem mit einer Kontaktfeder (14), einem Schaltkontakt (15), der auf der Kontaktfeder (14) angeordnet ist, und einem Festkontakt (16), der mit dem Schaltkontakt (15) zusammenwirkt,
- einem ersten und einem zweiten aus dem Gehäuse (1, 2) herausführenden Anschlußleiter (3) zum Anschluß des Schaltkontaktes (15) und des Festkontaktes (16).

2. Lasttrennschalter nach Anspruch 1,
**dadurch gekennzeichnet,**
**daß** der Anker (6) eine Rastnase (18) aufweist, die an einer Jochkante (19) der Kernanordnung angreift und durch eine Aufreißfeder (20) gegen die Jochkante (19) vorgespannt ist.

3. Lasttrennschalter nach Anspruch 1,
**dadurch gekennzeichnet,**
**daß** die Kontaktfeder (14) mindestens einen die Aufreißfeder (20) bildenden Aufreißschenkel besitzt, der an dem Anker (6) angreift.

4. Lasttrennschalter nach Anspruch 1,
**dadurch gekennzeichnet, daß** der Schaltkontakt (15) durch die Kontaktfeder (14) gegen den Festkontakt (16) vorgespannt ist.

5. Lasttrennschalter nach Anspruch 1,
**dadurch gekennzeichnet,**
**daß** der Schaltkontakt (15) mit einer zusätzlichen Litze (17) mit dem ersten Anschlußleiter (3) verbunden ist.

6. Lasttrennschalter nach Anspruch 1,
**dadurch gekennzeichnet,**
**daß** der Anker (6) im wesentlichen L-förmig ist, wobei sich ein Längsschenkel im Bereich von Polflächen der Kernanordnung (8, 9, 10) erstreckt und ein Querschenkel mit seinem freien Ende zum Öffnen der Kontakte (15, 16) an dem beweglichen Teil des Kontaktsystemes angreift.

7. Lasttrennschalter nach Anspruch 1,
**dadurch gekennzeichnet,**
**daß** sich die Ankerfeder (10) im wesentlichen bogenförmig um die Längsachse der Spule (5) erstreckt,
so daß ein mittlerer Abschnitt der Ankerfeder (10) nahe einer Gehäusewand liegt.

8. Lasttrennschalter nach Anspruch 7,
**dadurch gekennzeichnet,**
**daß** der mittlere Abschnitt der Ankerfeder (10) an einem feststehenden Teil des Lasttrenschalter gelagert ist, so daß sich eine wippenartige Anordnung der Ankerfeder (10) ergibt.

9. Lasttrennschalter nach Anspruch 1,
**dadurch gekennzeichnet,**
**daß** ein Gehäuseabschnitt (4) nahe des mittleren Abschnittes der Ankerfeder (10) elastische Eigenschaften aufweist, so daß eine Kraft von außerhalb des Gehäuses über den elastischen Gehäuseabschnitt (4) auf den mittleren Abschnitt der Ankerfeder (10) übertragbar ist.

## Claims

1. Load-disconnecting switch, especially for use in motor vehicles, comprising
a housing with a base (1) and a housing cap (2),
a magnet system with a reel (5), a core arrangement (7, 8, 9) and an armature (6), whereby the core arrangement (7, 8, 9) comprises a permanent magnet section (9), which applies a retention force, by means of which the armature (6) is attracted towards pole surfaces of the core arrangement (7, 8, 9), and whereby the magnet system can be excited in relation to the permanent magnet section (9),
an armature spring (10), by means of which the armature (6) is biased into an opened position, whereby the retention force of the permanent magnet section (9) is greater than the spring force of the armature spring (10), when the armature (6) is attrected.
a contact system with a spring contact (14), a switch contact (15), which is arranged on the spring contact (14), and a fixed contact (16), which works together with the switch contact (15),
a first and a second connecting conductor (3) projecting from the housing (1, 2) for connecting the switch contact (15) with the fixed contact (16).

2. Load-disconnecting switch according to claim 1, **characterised in that** the armature (6) comprises a catch projection (18), which engages a yoke edge (19) of the core arrangement and which is biased by an opening spring (20) against the yoke edge (19).

3. Load-disconnecting switch according to claim 1, **characterised in that** the spring contact (14) comprises at least one opening limb which forms the opening spring (20) and engages the armature (6).

4. Load-disconnecting switch according to claim 1, **characterised in that** the switch contact (15) is biased by means of the spring contact (14) against the fixed contact (16).

5. Load-disconnecting switch according to claim 1, **characterised in that** the switch contact (15) is connected to the first connecting conductor (3) with an additional strand (17).

6. Load-disconnecting switch according to claim 1, **characterised in that** the armature (6) is essentially L-shaped, whereby a longitudinal limb extends in the region of the pole surfaces of the core arrangement (8, 9, 10) and a transverse limb engages with its free end the movable part of the contact system in order to open the contacts (15, 16).

7. Load-disconnecting switch according to claim 1, **characterised in that** the armature spring (10) extends essentially in a bow shape around the longitudinal axis of the reel (5), so that a middle section of the armature spring (10) lies close to a housing wall.

8. Load-disconnecting switch according to claim 7, **characterised in that** the middle section of the armature spring (10) is supported on a fixed part of the load-disconnecting switch, so that a rocker type arrangement of the armature spring (10) is created.

9. Load-disconnecting switch according to claim 1, **characterised in that** a housing section (4) close to the middle section of the armature spring (10) displays flexible characteristics, so that a force from outside the housing can be transferred via the elastic housing section (4) onto the middle section of the armature spring (10).

## Revendications

1. Sectionneur de charge, utilisé de préférence dans des véhicules automobiles, comportant
un boîtier avec un socle (1) et un couvercle de boîtier (2),
un système magnétique avec une bobine (5), un ensemble de noyau (7, 8, 9) et une armature (6), l'ensemble de noyau (7, 8, 9) comportant une section à aimantation permanente (9), établissant une force de retenue attirant l'armature (6) sur les faces polaires de l'ensemble de noyau (7, 8, 9), le système magnétique pouvant être excité contre la section à aimantation permanente (9),
un ressort d'armature (10), poussant l'armature (6) dans une position ouverte, la force de retenue de la section à aimantation permanente (9) étant supérieure à la force élastique du ressort d'armature (10) lors de l'attraction de l'armature (6),
un système de contact avec un ressort de contact (14), un contact de commutation (15) agencé sur le ressort de contact (14) et un contact fixe (16) coopérant avec le contact de commutation (15),
un premier et un deuxième conducteurs de raccordement (3) menant vers l'extérieur du boîtier (1, 2) en vue du raccordement du contact de commutation (15) et du contact fixe (16).

2. Sectionneur de charge selon la revendication 1, **caractérisé en ce que** l'armature (6) comporte une patte de verrouillage (18), s'engageant dans un bord de la culasse (19) de l'ensemble de noyau et poussé par un ressort d'ouverture (20) contre le bord de la culasse (19).

3. Sectionneur de charge selon la revendication 1, **caractérisé en ce que** le ressort de contact (14) comporte au moins une branche d'ouverture constituant le ressort d'ouverture (20), s'engageant dans l'armature (6).

4. Sectionneur de charge selon la revendication 1, **caractérisé en ce que** le contact de commutation (15) est poussé par le ressort de contact (14) contre le contact fixe (16).

5. Sectionneur de charge selon la revendication 1, **caractérisé en ce que** le contact de commutation (15) est raccordé par l'intermédiaire d'un toron supplémentaire (17) avec le premier conducteur de raccordement (3).

6. Sectionneur de charge selon la revendication 1, **caractérisé en ce que** l'armature (6) a pour l'essentiel une forme en L, une branche longitudinale s'étendant dans la région des faces polaires de l'ensemble de noyau (8, 9, 10) et une branche transversale s'engageant avec son extrémité libre dans la partie mobile du système de contact en vue de l'ouverture des contacts (15, 16).

7. Sectionneur de charge selon la revendication 1, **caractérisé en ce que** le ressort d'armature (10) s'étend pour l'essentiel en arc autour de l'axe longitudinal de la bobine (5), de sorte qu'une section centrale du ressort d'armature (10) est proche d'une paroi du boîtier.

8. Sectionneur de charge selon la revendication 7, **caractérisé en ce que** la section centrale du ressort d'armature (10) est supporté sur une partie fixe du sectionneur de charge, de sorte à établir un agencement en bascule du ressort d'armature (10).

9. Sectionneur de charge selon la revendication 1, **caractérisé en ce qu'**une section du boîtier (4) proche de la section centrale du ressort d'armature (10) présente des propriétés élastiques, de sorte qu'une force peut être transmise de l'extérieur du boîtier à travers la section élastique du boîtier (4) sur la section centrale du ressort d'armature (10).
